(19) **Europäisches Patentamt**

**European Patent Office**

**Office européen des brevets**

(11) **EP 1 670 172 A1**

(12) **DEMANDE DE BREVET EUROPEEN**

(43) Date de publication:
**14.06.2006 Bulletin 2006/24**

(51) Int Cl.:
*H04L 9/08* (2006.01)   *H04L 9/30* (2006.01)

(21) Numéro de dépôt: **04292975.2**

(22) Date de dépôt: **10.12.2004**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(71) Demandeur: **Nagra France Sarl**
**75015 Paris (FR)**

(72) Inventeurs:
- **Nimour, Abdelkrim**
  **92320 Chatillon (FR)**

- **Barbier, Eve-Marie**
  **92400 Courbevoie (FR)**
- **Bredy, Nicolas**
  **78180 Montigny-le-Bretonneux (FR)**

(74) Mandataire: **Wenger, Joel-Théophile**
**Leman Consulting S.A.**
**62 route de Clémenty**
**1260 Nyon (CH)**

(54) **Procédé et système d'encryption par un proxy.**

(57) La présente invention concerne un procédé de transmission de messages entre un émetteur et au moins un récepteur, comportant les étapes suivantes :

- chiffrement du message (m) à transmettre au moyen d'une clé (a) associée audit émetteur;
- envoi du message chiffré dans un module de conversion comportant une clé de conversion ($\pi_{a \to b}$) et une fonction de conversion;
- conversion du message chiffré reçu dans le module de conversion en un message chiffré de façon à pouvoir être déchiffré par une clé (b) spécifique audit récepteur, cette conversion étant effectuée sans que le message initial n'apparaisse en clair dans le module de conversion;
- envoi du message converti audit récepteur;
- déchiffrement dudit message transformé reçu par ledit récepteur au moyen de la clé spécifique b;

caractérisé en ce que la clé de conversion ($\pi_{a \to b}$) du module de conversion dépend d'une puissance de la clé (a) liée à l'émetteur et de la clé (b) liée au récepteur.

Cette invention concerne également un système de transmission de messages entre un émetteur et au moins un récepteur, ce système étant agencé pour mettre en oeuvre le procédé de l'invention.

**FIG. 2**

EP 1 670 172 A1

**Description**

**DOMAINE TECHNIQUE**

La présente invention concerne d'une part un nouveau procédé de transmission de messages destinés à être transmis entre un émetteur et au moins un récepteur, et d'autre part, un système comportant un émetteur et au moins un récepteur, ce système utilisant le procédé de chiffrement mentionné ci-dessus.

Elle se place notamment mais pas exclusivement dans le contexte de l'encryption de données à accès conditionnel, ces données formant un contenu transmis par un fournisseur à plusieurs unités multimédia. Ces données ou ce contenu peuvent en particulier être des événements de télévision à péage.

**TECHNIQUE ANTERIEURE**

Il existe actuellement de nombreux procédés de chiffrement de messages, ces procédés ayant chacun des caractéristiques spécifiques concernant leur application ou leur niveau de sécurité.

Dans la plupart des cas, le contenu est tout d'abord chiffré au moyen d'une pluralité de clés qui peuvent chacune avoir une durée de vie relativement courte, ces clés étant nommées "control words" ou mots de contrôle. Le contenu ainsi chiffré est diffusé à destination des unités multimédia abonnées au fournisseur. Les mots de contrôle sont eux-mêmes chiffrés au moyen d'une clé de transmission et envoyés sous forme de messages de contrôle (Entitlement control message ECM).

L'extraction et le déchiffrement des mots de contrôle sont effectués dans un module de sécurité qui peut avoir notamment la forme d'une carte à puce. Lorsque les mots de contrôle ont été déchiffrés, ils peuvent être utilisés pour déchiffrer le contenu. Cette procédure étant bien connue de l'homme du métier, elle n'est pas décrite plus en détails ici.

Il existe également des procédés dans lesquels l'utilisation d'un module de sécurité n'est pas nécessaire ou pas souhaité. Un exemple d'un tel procédé utilise un type de chiffrement spécifique tel que notamment proposé par Blaze & Strauss (Matt BLAZE, Martin STRAUSS. Atomic Proxy Cryptography, Technical report, AT&T Research, (http://www.research.att.com/resources/trs/TRs/98/98.5/98.5.1.body.ps)

Ce document décrit un procédé de chiffrement dans lequel un message est chiffré au moyen d'une clé liée à l'émetteur et envoyé dans un module de conversion qui transforme le message reçu en un autre message qui peut être déchiffré au moyen d'une clé liée au récepteur. Ce module de conversion ne livre ni le message en clair, ni la clé liée à l'émetteur, ni celle liée au récepteur. Ce module contient également une fonction particulière, nommée par la suite fonction de conversion, qui permet de modifier le message selon les contraintes définies ci-dessus.

Le module de conversion selon Blaze & Strauss fonctionne de la façon suivante :

Du côté du chiffrement, c'est-à-dire du côté de l'émetteur, on a une clé secrète a et un générateur de nombres aléatoires, qui génère une valeur k. Cette valeur appartient à l'ensemble $\mathbb{Z}^*_{2q}$ c'est-à-dire à l'ensemble des nombres entiers compris entre 0 et 2q-1 qui sont premiers avec 2q. A titre d'exemple, si q = 5, l'ensemble $\mathbb{Z}^*_{10} = \{0;1;2;3;5;7;9\}$. On détermine également deux valeurs p et q tels que p et q sont des grands nombres premiers et tels que p=2q+1. La notion de grand nombre n'est pas définie par une valeur numérique précise. Plus les nombres utilisés sont grands, plus il est difficile pour un tiers de trouver ces valeurs par des essais successifs. Le niveau de sécurité est donc lié à la grandeur des nombres utilisés.

L'émetteur dispose également d'une valeur g appartenant à l'ensemble $\mathbb{Z}^*_p$ .

Du côté du chiffrement, on génère également les messages :

$$C1 = (m\, g^k )_{\text{mod } p}$$

et

$$C2 = [(g^a)^k]_{\text{mod } p}$$

La valeur $(g^a)_{\text{mod } p}$ est la clé publique de l'émetteur.

Le couple <C1;C2> forme le message qui est généré par l'émetteur et qui est transmis au module de conversion.

Le module de conversion dispose d'une clé de conversion et d'une fonction de conversion.

La clé est égale à :

$$\pi_{a \to b} = (b * \frac{1}{a})_{\text{mod } 2q}$$

La fonction de conversion associée à cette clé est :

$$C2' = [(C2)^{(\pi_{a \to b})}]_{\text{mod } p}$$

Lorsque le couple <C1, C2> est introduit dans le module de conversion, la valeur de C1 n'est pas modifiée. C2 est par contre modifié en C2' selon la fonction de conversion ci-dessus.

Le couple <C1, C2> entrant dans le module de conversion est transformé en un couple sortant <C1, C2'>. Ce dernier est transmis au récepteur et plus précisément à la partie sécurisée du récepteur qui contient la clé secrète b1 spécifique à ce récepteur. Chaque récepteur dispose en principe d'une clé b qui lui est propre.

A partir des valeurs reçues, le récepteur peut déduire le message en appliquant la formule suivante :

$$m = (C1 * \frac{1}{(C2')^{(1/b) \text{mod} 2q}}) \text{ mod } p$$

Bien que parfaitement fonctionnel, ce procédé soufre d'un inconvénient majeur lorsqu'il est mis en pratique, en particulier dans un environnement dans lequel un émetteur alimente un nombre important de récepteurs. En effet, en connaissant la clé $b_1$ d'un récepteur spécifique et la fonction de conversion $\pi_{a \to b}$, il est relativement simple de calculer la clé a de l'émetteur telle que $\pi_{a \to b1} = (b_1 * \frac{1}{a})_{\text{mod } 2q}$.

A partir de là, il est possible pour une personne mal intentionnée de mettre à disposition de tiers, la clé a de l'émetteur. Ceci permet ensuite de calculer les clés $b_i$ de touts les récepteurs alimentés par cet émetteur et utilisant la même fonction de conversion. Cela signifie qu'un utilisateur qui est abonné à au moins un canal géré par le fournisseur de données pourra librement avoir accès à tous les autres canaux de ce fournisseur.

La description ci-dessous explique de façon plus détaillée, le problème mentionné précédemment.

Imaginons un utilisateur ayant une unité multimédia STB2 avec la clé secrète b2. Cet utilisateur est abonné aux canaux 1, 2 et 3 ayant respectivement les clés a1, a2 et a3. Supposons que cet utilisateur connaît sa clé secrète b2. Du fait qu'il est abonné, il reçoit les clés de conversion

$$\pi_{a1 \to b2}, \pi_{a2 \to b2} \text{ et } \pi_{a3 \to b2}, \text{ où } \pi_{ai \to b2} = (b_2 * \frac{1}{ai})_{\text{mod} 2q}$$

A partir de ces éléments, il est relativement simple de calculer a1, a2 et a3. L'utilisateur mal intentionné peut donc mettre à disposition, par exemple par un réseau tel qu'Internet, ces clés a1, a2 et a3.

Imaginons un autre utilisateur ayant une unité multimédia STB1 avec la clé secrète b1. Cet utilisateur est abonné au canal 1 utilisant la clé a1. Ce canal peut par exemple faire partie d'une offre de base bon marché. L'abonné reçoit donc la clé de conversion $\pi_{a1 \to b1} = (b_1 * \frac{1}{a1})_{\text{mod} 2q}$. A partir de là, il pourra facilement déterminer b1, c'est-à-dire la clé secrète de sa propre unité multimédia. Il peut également recevoir a2 et a3 de la part de l'utilisateur ayant l'unité multimédia STB2 mentionné précédemment. Avec ces éléments, il peut créer la clé de conversion pour les canaux 2 et 3 en utilisant $\left(b_1 * \dfrac{1}{a2}\right)_{\text{mod}2q} = \pi_{a2 \rightarrow b1}$ et $\left(b_1 * \dfrac{1}{a3}\right)_{\text{mod}2q} = \pi_{a3 \rightarrow b1}$. Il aura ainsi accès aux canaux 2 et 3 sans avoir acquis les droits d'abonnement correspondant. Il en va de même pour une personne ayant résilié son abonnement et qui a calculé la clé spécifique $b_1$ de son récepteur avant cette résiliation.

Ainsi, si la sécurité de l'un des récepteurs est compromise, la sécurité de tous les autres récepteurs est également compromise.

Un autre inconvénient du procédé tel que décrit ci-dessus vient du fait que la construction de la clé de conversion nécessite la connaissance de la clé secrète a de l'émetteur et de celle de l'étage de chiffrement b, ce qui n'est pas optimal du point de vue de la sécurité.

## EXPOSE DE L'INVENTION

La présente invention se propose de pallier les inconvénients des procédés de l'art antérieur et en particulier du procédé selon Blaze & Strauss tel que décrit ci-dessus.

Ce but est atteint par un procédé de transmission de messages entre un émetteur et au moins un récepteur, comportant les étapes suivantes :

- chiffrement du message (m) à transmettre au moyen d'une clé (a) associée audit émetteur;
- envoi du message chiffré dans un module de conversion comportant une clé de conversion ($\pi_{a \rightarrow b}$) et une fonction de conversion;
- conversion du message chiffré reçu dans le module de conversion en un message chiffré de façon à pouvoir être déchiffré par une clé (b) spécifique audit récepteur, cette conversion étant effectuée sans que le message initial n'apparaisse en clair dans le module de conversion;
- envoi du message converti audit récepteur;
- déchiffrement dudit message transformé reçu par ledit récepteur au moyen de la clé spécifique b;

caractérisé en ce que la clé de conversion ($\pi_{a \rightarrow b}$) du module de conversion dépend d'une puissance de la clé (a) liée à l'émetteur et de la clé (b) liée au récepteur.

Les buts de l'invention sont également atteints par un système de transmission de messages entre un émetteur et au moins un récepteur, ledit émetteur comportant des moyens pour chiffrer ledit message (m) au moyen d'une clé (a) associée à cet émetteur, ledit système comportant au moins un module de conversion dans lequel est mémorisée une clé de conversion ($\pi_{a \rightarrow b}$) et une fonction de conversion, ce module de conversion étant agencé pour convertir le message (m) entrant en un message susceptible d'être déchiffré par une clé (b) spécifique audit récepteur, ce récepteur comportant un étage de déchiffrement agencé pour déchiffrer le message sortant du module de conversion, caractérisé en ce que la clé de conversion ($\pi_{a \rightarrow b}$) du module de conversion dépend d'une exponentielle de la clé (a) liée à l'émetteur et de la clé (b) liée au récepteur.

Le procédé de l'invention s'applique dans les cas où le récepteur est capable de déchiffrer des messages chiffrés selon l'algorithme d'ElGamal (Taher ElGamal, "A Public-Key Cryptosystem and a Signature Scheme Based on Discrete Logarithms", IEEE Transactions on Information Theory, v. IT-31, n. 4, 1985, pp469-472 or CRYPTO 84, pp10-18, Springer-Verlag.) ou toutes variantes de celui-ci, en particulier des variantes utilisant au moins une courbe elliptique.

Le procédé de l'invention assure une sécurité optimale tout en évitant la nécessité d'utiliser un module de sécurité. En utilisant le procédé de l'invention, les flux de données et de messages sont chiffrés de façon identique pour chaque utilisateur et peuvent être diffusés de façon conventionnelle. Les données et les messages sont ensuite déchiffrés par chaque utilisateur de telle manière que les données accessibles par l'un des utilisateurs ne peuvent pas être employées par un autre utilisateur.

En outre, la connaissance d'une clé secrète de l'un des récepteurs ne permet pas de calculer d'autres clés utilisées dans le système. Ainsi, seul le récepteur dont la clé secrète été compromise est capable d'avoir accès à des données pour lesquelles il n'a pas nécessairement l'autorisation. Il ne pourra pas en faire bénéficier des tiers. La découverte des secrets de l'un des récepteurs ne compromet pas donc la sécurité des autres récepteurs liés au même émetteur.

## BREVE DESCRIPTION DES DESSINS

L'invention sera mieux comprise grâce à la description détaillée qui va suivre et qui se réfère aux dessins annexés qui sont donnés à titre d'exemple nullement limitatif, dans lesquels :

- la figure 1 représente le système de transmission de messages selon la présente invention, dans un mode de réalisation spécifique; et
- la figure 2 illustre de façon générale le procédé de transmission de messages de l'invention.

**MANIERES DE REALISER L'INVENTION**

La présente invention est décrite en référence aux figures, sur la base d'une application pratique dans laquelle l'émetteur est un centre de gestion CG de télévision à péage et dans laquelle les récepteurs sont des unités multimédia STB destinées à la réception d'événements de télévision à péage. Ces unités multimédia sont par exemple des décodeurs ou des ordinateurs.

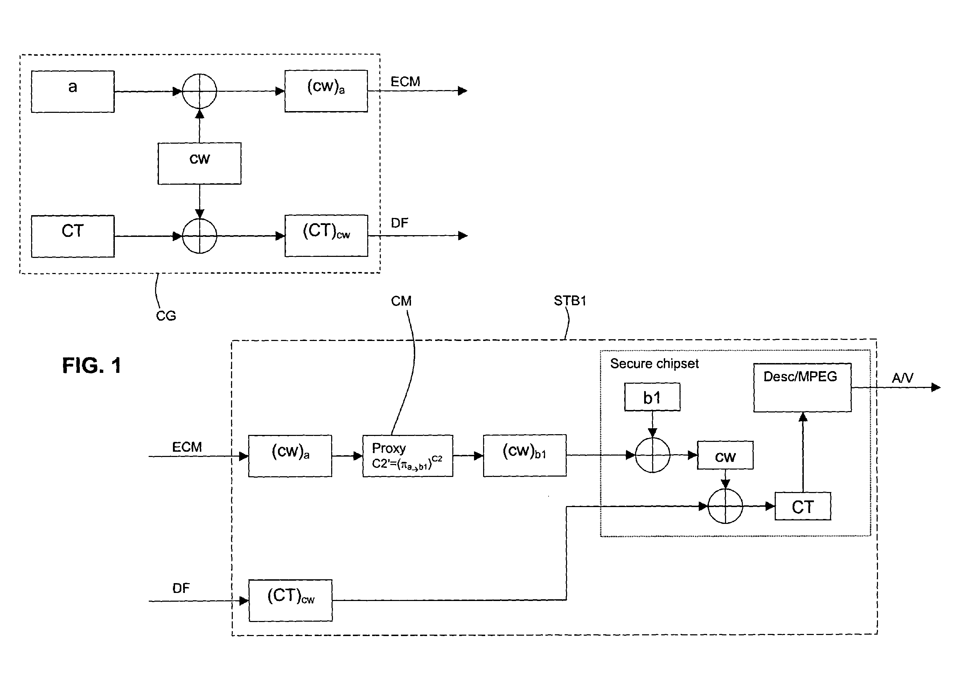

Dans le mode de réalisation illustré en particulier par la figure 1, il est supposé qu'un contenu CT à transmettre c'est-à-dire des données concernant un événement de télévision à péage sont chiffrées avec des mots de contrôle cw. Le procédé selon l'invention est appliqué sur les messages de contrôle ECM contenant les mots de contrôle. Il est toutefois à noter qu'il est possible d'appliquer le procédé de l'invention directement aux données relatives aux événements de télévision à péage. Dans ce cas, ceux-ci ne seraient pas chiffrés par des mots de contrôle. Cette manière de faire n'est toutefois pas préférée en pratique du fait que le temps de déchiffrement des messages doit être suffisamment court pour pouvoir afficher le contenu de façon adéquate. De plus, le procédé de l'invention nécessite une bande passante relativement importante. Le procédé pourrait donc être utilisé lorsque l'on dispose d'une bande passante suffisante et que le déchiffrement peut être effectué suffisamment rapidement.

Chaque unité multimédia $STB_1$, $STB_2$, $STB_n$ dispose d'une clé spécifique respectivement $b_1$, $b_2$, $b_n$ et est associée à un module de conversion CM. Ce module peut être dans une partie non-sécurisée du décodeur ou éloignée physiquement du décodeur, par exemple dans un centre de redistribution tel que ceux connus sous l'acronyme DSLAM. Le centre de gestion CG dispose d'une clé a. Il est à noter que cette clé a peut être spécifique à un canal ou à un produit.

Lorsqu'un contenu CT doit être diffusé, il est tout d'abord chiffré au moyen de mots de contrôle cw. Le message obtenu est représenté par (CT)cw sur la figure 1. L'ensemble des messages est envoyé sous la forme d'un flux de données DF à destination des récepteurs concernés. Les mêmes mots de contrôles cw sont chiffrés par la clé a du centre de gestion, ce qui donne $(cw)_a$. Ces mots de contrôle chiffrés sont introduits dans des messages de contrôle ECM de façon bien connue.

Le flux de messages de contrôle ECM est également diffusé à destination des récepteurs concernés.

Ces deux flux sont reçus par un récepteur représenté par STB1 sur la figure 1. Il est supposé ici que l'unité multimédia dispose des droits pour déchiffrer le contenu CT envoyé, ce qui en pratique, doit être vérifié. Cette vérification se fait de façon conventionnelle, de manière que l'envoi des droits sous forme de messages de gestion EMM. Pour cette raison, ces étapes relatives aux droits en sont pas décrites en détail ici.

Le récepteur comporte une unité de sécurité monolithique contenant une clé secrète b1, inaccessible depuis l'extérieur de cette unité. Elle comporte également un décompresseur MPEG.

Le flux DF du contenu chiffré (CT)cw est transmis directement à l'unité de sécurité dans laquelle il sera traité. Le flux des messages de contrôle ECM est traité de façon conventionnelle pour en extraire les mots de contrôle chiffrés $(cw)_a$. Ces mots de contrôle $(cw)_a$ sont alors envoyés au module de conversion de l'unité multimédia concernée. Dans la figure 1, le module de conversion est représenté comme intégré à l'unité multimédia. Il est également possible de regrouper les modules de conversion dans un centre de retransmission tel que ceux connus sous l'acronyme DSLAM (Digital Subscriber Line Access Multiplexer). Chaque module de conversion est ensuite relié à l'unité multimédia par une ligne spécifique.

Dans le module de conversion, le message entrant, chiffré par la clé a est converti en un message sortant, chiffré par la clé b1. Le message sortant $(cw)_{b1}$ est envoyé à l'étage de déchiffrement qui peut le déchiffrer au moyen de la clé b1.

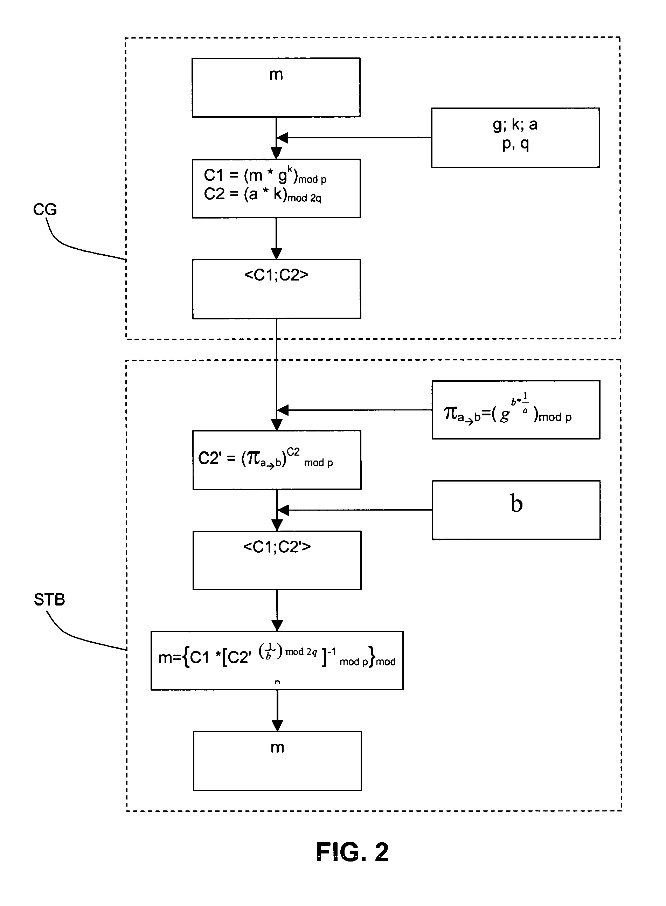

La clé de conversion ainsi que la fonction associée selon la présente invention sont décrites en détail plus loin, en référence à la figure 2.

En référence à la figure 1, lorsque les mots de contrôle cw ont été déchiffrés en utilisant la clé b1 de l'unité multimédia, ils peuvent être utilisés de façon conventionnelle pour déchiffrer le contenu CT qui, à son tour peut être traité en vue de son utilisation par exemple sur un écran de téléviseur.

La description ci-dessous, qui se réfère à la figure 2, mentionne d'une part le procédé général de l'invention et d'autre part donne un exemple chiffré sur la base de valeurs petites, qui ne sont pas utilisables en pratique, mais qui permettent de mieux comprendre le procédé général. Ces valeurs sont trop petites pour assurer un niveau de sécurité adéquat dans une application réelle.

Selon cette figure, il est supposé qu'un message m est chiffré dans le centre de gestion et envoyé au récepteur STB1 disposant de la clé secrète $b_1$. Ce message m initial donne lieu, dans le centre de gestion, à deux messages chiffrés, référencés C1 et C2 sur la figure 2. C1 est égal à :

$$C1 = (m\ g^k)_{mod\ p}$$

et C2 est égal à :

$$C2 = (a\ k)_{mod\ 2q}$$

- où p, q sont des grands nombres pre $\mathbb{Z}^*_p$ tels que p=2q+1
- g est un nombre entier appartenant à $\mathbb{Z}^*_p$ . Il est à noter que ce nombre peut être divulgué sans mettre en péril la sécurité du système de l'invention.
- a est la clé secrète de l'émetteu $\mathbb{Z}^*_{2q}$ me indiqué précédemment et
- k est un nombre aléatoire dans $\mathbb{Z}^*_{2q}$ .

Pour mémoire, $\mathbb{Z}^*_{2q}$ est l'ensemble des nombres entiers compris entre 0 et 2q-1 qui sont premiers avec 2q.

Dans l'exemple numérique, supposons que les valeurs suivantes ont été choisies :

$$p=11 \quad q=5 \quad k=7$$
$$g=2 \quad a=3 \quad m=8$$

Avec ces valeurs, on aura :

$$C1 = (m\ g^k)_{mod\ p} = (8 * 2^7)_{mod\ 11} = 1$$

$$C2 = (a\ k)_{mod\ 2q} = (3 * 7)_{mod\ 10} = 1$$

Le couple <C1;C2> forme le message chiffré à envoyer. Ce couple est envoyé aux modules de conversion des récepteurs concernés. La suite de la description concerne le traitement de ce couple dans le module de conversion associé à l'unité multimédia STB1 ayant la clé secrète b1.

Ce module de conversion contient la clé de conversion suivante :

$$\pi_{a \to b1} = \left( g^{(b1 * \frac{1}{a})\ mod\ 2q} \right)_{mod\ p}$$

Il contient également la fonction de conversion suivante :

$$C2' = \left[ (\pi_{a \to b1})^{C2} \right]_{mod\ p}$$

Le couple <C1;C2> tel qu'introduit dans le module de conversion est transformé en <C1 ;C2'> où C2' est tel que défini ci-dessus.

On peut montrer qu'en remplaçant ($\pi_{a \to b1}$) par la valeur indiquée ci-dessus et C2 par (a * k)$_{mod\ 2q}$, le couple converti <C1;C2'> ne dépend plus de la clé a utilisée par le centre de gestion, mais de la clé b1 liée au récepteur.

En utilisant les valeurs numériques telles que définies ci-dessus, et en choisissant la clé b1 liée au récepteur telle que b1 = 9, on a :

$$(\pi_{a \to b1}) = ( g^{(b1 * \frac{1}{a}) \bmod 2q} ) \bmod p$$

Par définition, $(\frac{1}{a})_{\bmod x}$ est tel que $(a * \frac{1}{a})_{\bmod x}$ est égal à 1.

Si a = 3, on en déduit que 1/a = 7 puisque $(3*7)_{\bmod 10} = 1$

On a donc $(\pi_{a \to b1}) = (g^{(b1*1/a)\bmod 2q})_{\bmod p} = (2^{(9*7)\bmod 10})_{\bmod 11} = 2^3{}_{\bmod 11} = 8$

$$C2' = (\pi_{a \to b1})^{C2} \bmod p = (8^1)_{\bmod 10} = 8$$

Dans cet exemple numérique, le couple converti est donc <1;8> ou de façon générale <C1,C2'>.

A partir de ce couple et en connaissant la valeur de b1, on peut calculer la valeur de m, le message qui a été chiffré. Ce calcul se fait en utilisant l'équation suivante :

$$m = \left\{ C1 * [C2'^{(\frac{1}{b1})\bmod 2q}]^{-1}{}_{\bmod p} \right\} \bmod p$$

Ceci permet donc de déchiffrer le message initial.

En reprenant l'exemple numérique précédent, on a :

$$\text{Si } b1 = 9, \left(\tfrac{1}{b1}\right)_{\bmod 2q} = \left(\tfrac{1}{9}\right)_{\bmod 10} = 9 \text{ car } (9*9)_{\bmod 10} = 1$$

$$m = \left\{ C1 * [C2'^9]^{-1}{}_{\bmod p} \right\} \bmod p$$

$$(C2'^9)_{\bmod 11} = (8^9)_{\bmod 11} = (134217728)_{\bmod 11} = 7$$

$$\left(\tfrac{1}{7}\right)_{\bmod 11} = 8 \text{ car } (7*8)_{\bmod 11} = 1$$

$$m = (1 * 8)_{\bmod 11} = 8$$

On a donc bien retrouvé le message initial.

Imaginons que la clé secrète b2 d'un récepteur soit compromise. La divulgation du message m en clair ne permet pas à un autre utilisateur de s'en servir du fait que chaque récepteur s'attend à recevoir un message chiffré au moyen de la clé secrète de ce récepteur. Un message en clair ne pourra pas être utilisé du fait qu'il n'est pas possible de contourner le premier étage de déchiffrement du module.

En utilisant le procédé de l'invention et en supposant qu'une personne ait pu trouver la clé secrète b2 de son récepteur, elle devrait trouver la valeur de a à partir de l'équation $\pi_{a \to b2} = ( g^{(b2 * \frac{1}{a}) \bmod 2q} )_{\bmod p}$ sans connaître g.

La résolution de cette équation passe par un calcul logarithmique. Du fait de l'extrême difficulté à résoudre ce genre d'équations, on peut s'assurer, en choisissant des nombres suffisamment grands, que l'équation ne soit pas résolue pendant le temps de validité de ces clés. A chaque changement de clé, le calcul devrait être recommencé.

Il n'est donc pas possible à partir de la connaissance de la clé d'une unité multimédia de mettre en péril la sécurité des autres unités multimédia.

La présente invention permet donc de garantir un niveau de sécurité optimal puisque d'une part il est très difficile d'obtenir la clé secrète d'une unité multimédia spécifique, d'autre part, la découverte d'une clé ne met pas en péril l'ensemble du système. Cette invention est donc particulièrement bien adaptée dans un environnement dans lequel on ne souhaite pas utiliser de modules de sécurité amovibles tels que des cartes à puce. De plus, le module de conversion de l'invention peut être distant de l'unité multimédia. Le procédé répond donc parfaitement bien aux exigences et aux contraintes de la télévision à accès conditionnel diffusée par un réseau tel qu'Internet. Il doit toutefois être noté que ceci ne représente qu'une des applications possibles de l'invention.

**Revendications**

1. Procédé de transmission de messages entre un émetteur et au moins un récepteur, comportant les étapes suivantes :

   - chiffrement du message (m) à transmettre au moyen d'une clé (a) associée audit émetteur;
   - envoi du message chiffré dans un module de conversion comportant une clé de conversion ($\pi_{a \to b}$) et une fonction de conversion;
   - conversion du message chiffré reçu dans le module de conversion en un message chiffré de façon à pouvoir être déchiffré par une clé (b) spécifique audit récepteur, cette conversion étant effectuée sans que le message initial n'apparaisse en clair dans le module de conversion;
   - envoi du message converti audit récepteur;
   - déchiffrement dudit message transformé reçu par ledit récepteur au moyen de la clé spécifique b;

   **caractérisé en ce que** la clé de conversion ($\pi_{a \to b}$) du module de conversion dépend d'une puissance de la clé (a) liée à l'émetteur et de la clé (b) liée au récepteur.

2. Procédé selon la revendication 1, **caractérisé en ce que** le message (m) à transmettre est un contenu (CT).

3. Procédé selon la revendication 1, **caractérisé en ce que** le message (m) à transmettre est un message d'autorisation contenant au moins un mot de contrôle (cw) ayant servi à chiffrer un contenu (CT).

4. Procédé selon les revendications 1 à 3, **caractérisé en ce que** la clé ($\pi_{a \to b}$) du module de conversion est égale à

$$\pi_{a \to b} = \left( g^{\frac{(b * \frac{1}{a}) \bmod 2q}{}} \right) \bmod p$$

   • où g est un nombre entier non nul dans $\mathbb{Z}^*_p$, c'est-à-dire dans l'ensemble des nombres entiers compris entre 0 et p-1 qui sont premiers avec p
   • où p et q sont des grands nombres premiers tels que p=2q+1
   • et où a est la clé liée à l'émetteur et b est la clé liée au récepteur et la fonction du module de transformation est

$$C2' = \left[ (\pi_{a \to b})^{C2} \right]_{\bmod p}$$

   • où $C2 = (a * k)_{\bmod 2q}$
   • où a est la clé liée à l'émetteur

   • et où k est un nombre aléatoire dans $\mathbb{Z}^*_{2q}$, c'est-à-dire dans l'ensemble des nombres entiers compris entre 0 et 2q-1 qui sont premiers avec 2q.

**5.** Système de transmission de messages entre un émetteur et au moins un récepteur, ledit émetteur comportant des moyens pour chiffrer ledit message (m) au moyen d'une clé (a) associée à cet émetteur, ledit système comportant au moins un module de conversion dans lequel est mémorisée une clé de conversion ($\pi_{a \to b}$) et une fonction de conversion, ce module de conversion étant agencé pour convertir le message (m) entrant en un message susceptible d'être déchiffré par une clé (b) spécifique audit récepteur, ce récepteur comportant un étage de déchiffrement agencé pour déchiffrer le message sortant du module de conversion, **caractérisé en ce que** la clé de conversion ($\pi_{a \to b}$) du module de conversion dépend d'une puissance de la clé (a) liée à l'émetteur et de la clé (b) liée au récepteur.

**6.** Système de transmission de messages selon la revendication 5, **caractérisé en ce que** la clé de conversion est

$$\pi_{a \to b} = \left( g^{(b * \frac{1}{a}) \bmod 2q} \right) \bmod p$$

• où g est un nombre entier non nul dans $\mathbb{Z}^*_p$, c'est-à-dire dans l'ensemble des nombres entiers compris entre 0 et p-1 qui sont premiers avec p
• où p et q sont des grands nombres premiers tels que p=2q+1
• et où a est la clé liée à l'émetteur et b est la clé liée au récepteur et la fonction du module de transformation est

$$C2' = [(\pi_{a \to b})^{C2}]_{\bmod p}$$

• où $C2 = (a * k)_{\bmod 2q}$
• où a est la clé liée à l'émetteur

• et où k est un nombre aléatoire dans $\mathbb{Z}^*_{2q}$, c'est-à-dire dans l'ensemble des nombres entiers compris entre 0 et 2q-1 qui sont premiers avec 2q.

**7.** Système de transmission de messages selon la revendication 5, **caractérisé en ce que** le module de conversion est disposé dans ledit récepteur.

**8.** Système de transmission de messages selon la revendication 5, **caractérisé en ce que** le module de conversion est disposé dans un centre de retransmission distinct dudit récepteur, connecté à distance à ce dernier.

FIG. 1

CG

m

g; k; a
p, q

$C1 = (m * g^k)_{mod\,p}$
$C2 = (a * k)_{mod\,2q}$

$<C1;C2>$

$\pi_{a \to b} = (g^{b*\frac{1}{a}})_{mod\,p}$

$C2' = (\pi_{a \to b})^{C2}{}_{mod\,p}$

b

$<C1;C2'>$

STB

$m = \left\{ C1 * \left[ C2'^{\left(\frac{1}{b}\right)mod\,2q} \right]^{-1}{}_{mod\,p} \right\}_{mod\,p}$

m

**FIG. 2**

**Office européen**

**des brevets**

**RAPPORT DE RECHERCHE EUROPEENNE**

Numéro de la demande

EP 04 29 2975

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X | BLAZE M ET AL: "Atomic Proxy Cryptography" ATT, 2 novembre 1997 (1997-11-02), pages 1-11, XP002239619 * le document en entier * | 1-8 | H04L9/08 H04L9/30 |
| A | BLAZE M ET AL: "DIVERTIBLE PROTOCOLS AND ATOMIC PROXY CRYPTOGRAPHY" ADVANCES IN CRYPTOLOGY- EUROCRYPT. INTERNATIONAL CONFERENCE ON THE THEORY AND APPLICATION OF CRYPTOGRAPHIC TECHNIQUES, SPRINGER VERLAG, DE, 31 mai 1998 (1998-05-31), pages 127-144, XP000858287 * page 135 - page 141 * | 1-8 | |
| A | US 6 779 111 B1 (GEHRMANN CHRISTIAN ET AL) 17 août 2004 (2004-08-17) * figures 1-3 * * colonne 4, ligne 33 - colonne 7, ligne 21 * | 1-8 | |

DOMAINES TECHNIQUES RECHERCHES (Int.Cl.7)

H04L

Le présent rapport a été établi pour toutes les revendications

| Lieu de la recherche | Date d'achèvement de la recherche | Examinateur |
|---|---|---|
| Munich | 11 mai 2005 | Bec, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
  .......................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 29 2975

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-05-2005

| Document brevet cité au rapport de recherche | | Date de publication | Membre(s) de la famille de brevet(s) | | Date de publication |
|---|---|---|---|---|---|
| US 6779111 | B1 | 17-08-2004 | AU | 4788400 A | 21-11-2000 |
| | | | CN | 1350735 A | 22-05-2002 |
| | | | WO | 0069114 A1 | 16-11-2000 |

EPO FORM P0460

Pour tout renseignement concernant cette annexe : voir Journal Officiel de l'Office européen des brevets, No.12/82